# EUROPEAN PATENT SPECIFICATION

(11) **EP 2 166 879 B1**
(45) Date of publication and mention of the grant of the patent: **15.10.2014**
(21) Application number: 08772040.5
(22) Date of filing: 26.06.2008
(51) Int. Cl.: A23L 1/236, A23L 1/307

(54) **STEVIA-CONTAINING TABLETOP SWEETENERS AND METHODS OF PRODUCING SAME**
STEVIA-HALTIGE TISCHSÜSSMITTEL UND VERFAHREN ZU IHRER HERSTELLUNG
ÉDULCORANTS DE TABLE À BASE DE STEVIA ET PROCÉDÉS DE PRODUCTION DE CEUX-CI

(30) Priority: 29.06.2007 US 947102 P
(43) Date of publication of application: 31.03.2010
(73) Proprietor: McNeil Nutritionals, LLC, Ft. Washington PA 19034 (US)
(72) Inventor: CATANI, Steven J., Athens, Georgia 30606 (US)
(74) Representative: Kirsch, Susan Edith
(86) International application number: PCT/US2008/068364
(87) International publication number: WO 2009/006208

(56) References cited:
- EP-A- 0 470 259
- JP-A- 8 000 214
- US-A1- 2007 082 103
- US-A1- 2007 116 828
- DATABASE WPI Week 198523 Thomson Scientific, London, GB; AN 1985-138871 XP002503902 & JP 60 075252 A (SEKISUI CHEM IND CO LTD) 27 April 1985 (1985-04-27)
- PRAKASH I ET AL: "Development of rebiana, a natural, non-caloric sweetener." FOOD AND CHEMICAL TOXICOLOGY, vol. 46, no. 7, July 2008 (2008-07), pages S75-S82, XP002503939

## Description

### Field of the Invention

The present invention is directed to stevia-containing tabletop sweetener compositions. Also disclosed are methods of making such composition. The stevia-containing sweetener compositions of the present invention include simple sugars.

### Background of the Invention

People often customize the taste of food and beverages by adding sweeteners thereto. For example, tabletop sweeteners are added to beverages, such as, coffee and tea; on cereals; on fruit; and as toppings on baked goods. Sweetening a food or beverage with a tabletop sweetener alters its flavor and usually increases its appeal. This behavior is found in all cultures, but is especially prevalent in western cultures.

Personal taste creates considerable variability in the amount of sweetness that one person prefers in a given food or beverage versus another person. For example, the amount of sweetness incorporated into a foodstuff during commercial production may not be adequate to satisfy some consumers while other consumers may find that the same amount of sweetness to be excessive. Moreover, consumers often desire to reduce their caloric intake for health or lifestyle reasons. Therefore, there exists a long-felt need for tabletop sweetener products that consumers may use to increase the sweetness of a product at the time of consumption that are consistent with their personal preferences and minimize additional caloric burden.

Tabletop sweeteners are a primary vehicle by which such taste customization is accomplished. Tabletop sweeteners are presently available in many different forms, including, granular, tablets, cohesive non-free flowing compositions (e.g., cubes), and the like.

Many types of sweeteners are available as tabletop sweeteners. These include natural sweeteners, such as, sucrose (i.e., cane sugar), honey, high fructose corn syrup, molasses, maple syrup, brown rice syrup, fruit juice sweeteners, barley malt, stevia and the like, as well as artificial sweeteners, such as, sucralose, aspartame, saccharin and the like.

Commonly available sweeteners have slightly different tastes that are variably preferred by individuals. Many sweeteners impart a bitter taste to the foods they sweeten. Saccharin, for example, is a sweetener that is known to impart a bitter taste. Other sweeteners have other taste components such as lingering metallic tastes, cooling or drying sensations, or combinations of the above sensations. Food ingredients have been used to overcome the bitterness. For example, cream of tartar is included in commonly sold saccharin packets. Additionally, several organizations, such as the Linguagen, have recently disclosed compounds that block bitter taste by modifying taste receptor signaling.

The most common sweeteners are nutritive sweeteners. Nutritive sweeteners not only provide sweetness, but are also absorbable into the bloodstream and may be metabolized to provide energy for immediate use or for storage as fat. Nutritive sweeteners are typically extracted from plants that produce them in various quantities and for various purposes. For example, sucrose, a nutritive sweetener in wide spread use, is produced from many sources, e.g., sugar cane and sugar beet roots.

Sugar alcohols are another form of sweetener. Sugar alcohols vary in sweetness from about half as sweet to about as sweet as sucrose. Accordingly, sugar alcohols may be used in place of sugar. Sugar alcohols have about one-half to three-quarters the amount of calories of sugar on a per weight basis. Sugar alcohols are slowly and incompletely absorbed from the small intestine into the blood. Absorbed sugar alcohols are converted to energy by processes that require little or no insulin. Accordingly, these sweeteners may be used by diabetics or those on low-carbohydrate diets.

High intensity sweeteners are well known alternatives to nutritive sweeteners. High intensity sweeteners provide sweetness without the calories and other metabolic impacts of the nutritive sweeteners. In many cases, high intensity sweeteners provide a sweet flavor that is preferred to nutritive sweeteners. Some high intensity sweeteners, such as, aspartame, are nutritive, but are so intense that they still provide negligible calories because very small amounts are required. Other high intensity sweeteners, such as, for example sucralose, are not absorbed when ingested and are, therefore, non-nutritive sweeteners.

Often the makers or users of these sweeteners add other components to them to overcome a less pleasant taste, for example, a bitter taste. For example, cream of tartar may be added to saccharin to offset its bitterness; and 2,4-dihydroxybenzoic acid may be added to sucralose to control lingering sweetness.

US 2007082103 discloses highly purified Stevioside and Rebaudioside A prepared from sweet glycoside extracts obtained from Stevia rebaudiana Bertoni leaves. The resulting sweeteners are disclosed as non-calorie, non-cariogenic, non-bitter, non-lingering sweeteners, which may be applied in foods, beverages, and milk products.

EP 0470259 discloses a low-calorie drinking composition comprising an inorganic electrolyte component and an organic acid component, characterized by containing a sweetening component comprising a stevia extract in an amount of 2 to 15 mg per mEq/l of an inorganic electrolyte cation.

US 2007116828 discloses tabletop sweetener compositions comprising non-caloric or low-caloric natural high-potency sweeteners and methods for making and using them. In particular, this document relates to different forms of tabletop sweetener compositions comprising at least one non-caloric or low-caloric natural high-potency sweeteners in combination with at least one bulking agent, or at least one sweet taste improving composition, or at least one anti-caking agent, or combinations thereof.

JP 8000214 discloses a sweetener provided by blending rebaudioside A derived from a naturally occurring material with a sweetener of a natural saccharide.

JP 60075252 discloses a composition containing maltitol, another saccharide and a specific extracted and purified Stevia rebaudiana Bertoni in a specific proportion, and having almost the same tasting property and sweetness intensity as those of sucrose.

Stevia is a non-caloric natural sweetener from the plant *Stevia rebaudiana bertoni.* The plant makes a number of sweet compounds collectively referred to as steviol glycosides, which make stevia 300 times sweeter than sucrose. These glycosides can be extracted from the plant with water and other solvents well known to those skilled in the art. They are heat stable, pH stable, do not ferment, and do not induce a glycemic response.

Of the glycosides found in stevia extracts, rebaudioside A is known to have the least aftertaste. This aftertaste described by many as bitter and licorice like, which is present in all current stevia extracts. While stevia extracts have many excellent properties, improvements in their taste profile would clearly be desirable.

Like with all high intensity sweetener containing sweetener compositions, stevia containing sweetener compositions typically have been provided with a bulking agent to aid in measurement and distribution into the users application. Among those disclosed or used include FOS and other fibers, maltodextrins, and erythritol. Erythritol is especially popular as it can mitigate some of the bitter taste.

Surprisingly, we discovered sweetening compositions where the bitter / licorice taste of rebaudioside A is modulated by simple sugars (e.g., refined sucrose), but not by complex sweeteners, e.g., maple and molasses. This is surprising as complex sugars have an inherent multidimensional taste would tend to "hide" the licorice note from the rebaudioside. Even more surprising, the simple sugars, which have only sweet taste, modulate the licorice note from rebaudioside A even when they contribute less than half the sweetness of the sweetening composition. Thus, it is surprising that the combination of low stevia levels, high purity rebaudioside A, and a simple refined sugar, such as sucrose or fructose, creates a sweetener composition with much lower characteristic licorice taste of stevia.

These have not been previously used due to the apparent contradiction of using a simple sugar in formulations which are inherently sugar substitutes.

### Summary of the Invention

A reduced calorie table top sweetening composition comprising, consisting of, and/or consisting essentially of from 2 wt% to 4 wt% stevia extract and 90 wt% to 98 wt% simple sugar selected from the group consisting of monosaccharides, disaccharides and combinations thereof, wherein the stevia extract provides from 20% to 97% of the sweetness and has a rebaudioside A level of from 80 wt% to 99 wt% relative to all steviol glycosides.

### Detailed Description

As used herein, the term "high intensity sweetener" means a substance that provides a high sweetness per unit mass compared to a nutritive sweetener and provides little or no nutritive value. Many high intensity sweeteners are known to those skilled in the art and any may be used in the present invention. Examples of high intensity sweeteners useful in the present invention include, for example, aspartame, acesulfame, alitame, brazzein, cyclamic acid, dihydrochalcones, extract of *Dioscorophyllum cumminsii*, extract of the fruit of *Pentadiplandra brazzeana,* glycyrrhizin, hernandulcin, monellin, mogroside, neotame, neohesperidin, saccharin, sucralose, extracts of sweet plants, such as stevia, thaumatin, salts, and combinations thereof. A preferred high intensity sweetener according to the present invention is sucralose.

As used herein, the term "sugar alcohol" means a food-grade alcohol derived from a sugar molecule. Sugar alcohols useful in the present invention include, for example, isomalt, erythritol, hydrogenated isomaltulose, hydrogenated starch hydrolyzates, lactitol, maltitol, mannitol, sorbitol, xylitol, and combinations thereof.

As used herein, a "food-grade" material is one that conforms to the standards for foods deemed safe for human consumption set forth in the Codex Alimentarius produced by the World Health Organization (1999).

As used herein, a g. (or other given amount) of Sucrose Equivalent Sweetness ("SES") means the amount of high intensity sweetener needed to be added to an 8 ounce glass of water in order to provide the same sweetness as an independent 8 ounce glass of water containing one g. (or the other given amount) of sucrose. For example, 1/200 g of aspartame will equal about one g. of SES because aspartame is about 200 times sweeter than sucrose. Similarly, 1/500 g to 1/600 g of sucralose will provide one g. of SES because sucralose is 500 to 600 times sweeter than sucrose.

As used herein, all numerical ranges provided are intended to expressly include at least all numbers that fall between the endpoints of ranges.

Preferably, the sweetening compositions of the present invention contain from 1 gram to 10 gram of SES.

A clean sweet tasting sweetener composition can be made from stevia extract provided certain conditions are met. First, stevia extract concentrated in rebaudioside A is used. Second, bulking agents are limited to simple sugars, specifically sweet, mono and disaccharide. Third, the stevia extract provide no more than 97% of the sweetness of the sweetening composition.

### STEVIA

Stevia is the extracts of the native South American plant *Stevia Rebaudiana Compositae Bertoni. Stevia rebaudiana* is native in South America. Its first known use was in Paraguay, but both the plant and extracts have been used for many years as a sweetener in South America, Asia, including Japan and China. It also has a broad audience in the United States where it is sold as a dietary supplement rather than as a sweetener due to its current regulatory status. As used herein Stevia refers to the plant, a stevia extract to the broad collection of steviol gylcosides which are found in the plant, and Stevioside and rebaudioside refer to specific steviol gylcosides.

Stevioside, sometimes referred to as stevia, (13-[(2-O-β-D-glucopyranosyl)oxy]-kaur-16-en-18-oic acid-4α-β-D-glucopyranosyl ester) and rebaudioside A are exemplary glycosides of the diterpene derivative steviol, extracted and refined from *Stevia rebaudiana bertoni* (also known as *eupatorium rebaudianum bertoni)* leaves. These glycosides are high intensity sweeteners, about 100 to about 500 times that of sucrose, but have metallic and bitter notes. They can be used in a wide range of low or reduced calorie food products and beverages.

Other sweet glycosides can also be extracted from *Stevia rebaudiana.* These have varying degrees of sweetness. As used herein "stevia extract" means a sweet glycoside extracted from a stevia plant. Table 1 contains typical glycoside compositions in the stevia plant leaves.

**Table 1**

| Steviol Glycoside | Concentration in Leaves | | | % of Glycosides |
|---|---|---|---|---|
| | low | high | average | average |
| Stevioside | 5% | 22% | 14% | 57% |
| Rebaudioside -A | 1.50% | 10% | 6% | 24% |
| Rebaudioside-B | 0% | 4% | 2% | 8% |
| Rebaudioside-C | 0% | 4% | 2% | 8% |
| Rebaudioside-D | 0% | 0.30% | 0% | 1% |
| Rebaudioside-E | 0% | 0.30% | 0% | 1% |
| | | | | |
| | 7% | 41% | 24% | 100% |

### Distribution of glycosides in Stevia rebuadiana leaves

Methods to selectively extract one or another of the gylocsides have been previously disclosed.

As seen in Table 1, the principle steviol glycoside found in the plant is referred to as stevioside. Stevioside typically represents about 57% of the glycosides that are present in a stevia extract.

Other glycosides found in the plant found in smaller quantities are noted in Table 1. Each has a different sweetness level and taste profile. Several grades of stevia are available, better grades having a higher rebaudioside A level as they contribute lower bitter taste levels. For these compositions, stevia extracts with rebaudioside A level higher than 80 wt% relative to all steviol glycosides are preferred with those with 90 wt% being more preferred and those with >95% being even more preferred.

Many products containing stevia extract are available. Table 2 shows commonly available products available in the Japan and the United States. The stevia extracts are generally blended with bulking ingredients to provide a manageable quantity for the user to dispense on whatever food product they wish to sweeten. For example, the SWEETLEAF® brand STEVIAPLUS product marketed by Wisdom Natural Brands is bulked maltodextrin or FOS. Without a bulking agent, the amount of stevia sweetener needed would be 20 to 25 mg. because stevia is about 300 times sweeter than sucrose. This amount is too small to reliably dispense from a sachet or other typical sweetener package. Other bulking agents that can be used include sugar alcohols, such as erythritol. As with other high intensity sweetener products, such as SPLENDA® brand No Calorie Sweetener or EQUAL® brand sweetener, the amount of bulking agent used is typically the smallest amount that provides for accurate delivery.

Table 2 also shows the ratio of bulking agents to stevia, as well as the sweetness contribution from the stevia where the bulking agent contributes sweetness (as with bulking with sugar alcohols) for currently known products. Also shown is the approximate amount of stevia required in the composition required to deliver equivalent sweetness of 1 g. of sugar in water.

**Table 2**

| Sweetener/Ingredient | Relative Sweetness | | | Energy | | | | | | | |
|---|---|---|---|---|---|---|---|---|---|---|---|
| | sucrose = 1 | g. per Tsp SES | g. SES per kcal | kcals per g. | HIS Market reference | Sugar | Stevia Plus | NSI Stevia | Stevita supreme packets | Stevita spoonable | Japanese Stevia blend |
| | | | | | Maltodextrin Sucralose | Sucrose | FOS Stevia 65 | Stevia FOS | Stevia Erythritol | Stevia Erythritol | Erythritol. Stevia 65 |
| Maltodextrin | 0.01 | 400 | 0.00 | 4.0 | 1 | | | 0.50 | | | 0.00 |
| FOS | 0.10 | 40.0 | 0.07 | 1.5 | | | 1.00 | 0.48 | | | 0.00 |
| Erythritol | 0.70 | 5.71 | | 0.0 | | | | | 1.00 | 1.00 | 98.70 |
| Fructose | 1.05 | 3.81 | 0.26 | 4.0 | | | | | | | 0.00 |
| Molasses Solids | 1.00 | 4.00 | 0.25 | 4.0 | | | | | | | 0.00 |
| Agave Nector (hydrolysed) | 1.05 | 3.81 | 0.26 | 4.0 | | | | | | | 0.00 |
| Sucralose | 600 | 0.0067 | | 0.0 | 0.0134 | | | | | | |
| Sucrose | 1.00 | 4.00 | 0.25 | 4.0 | | 4.00 | | | | | 0.00 |
| Concentrated Stevia (99 reb) | 330 | 0.0121 | | 0.0 | | | | | | | |
| Concentrated Stevia (90 reb) | 310 | 0.0129 | | 0.0 | | | | | | | |
| Concentrated Stevia (80 reb) | 291 | 0.0138 | | 0.0 | | | | | | | |
| Concentrated Stevia (65 reb) | 261 | 0.0153 | | 0.0 | | | | | 0.0450 | 0.0128 | |
| Stevia Extract (~24% reb) | 180 | 0.0222 | | 0.0 | | | 0.0217 | 0.0250 | | | 1.30 |
| | | | | | | | | | | | |
| Batch | | | | | 1.0134 | 4.0000 | 1.0217 | 1.0050 | 1.0450 | 1.0128 | 100.0000 |
| | | | | | | | | | | | |
| g stevia/batch | | | | | 0.0000 | 0.0000 | 0.0217 | 0.0250 | 0.0450 | 0.0128 | 1.3000 |
| mg stevia/tsp SES | | | | | 0.0 | 0.0 | 21.6 | 21.9 | 14.5 | 12.7 | 17.1 |
| g SES/batch | | | | | 8.05 | 4.00 | 4.01 | 4.56 | 12.45 | 4.05 | 303.45 |
| tsp SES/batch | | | | | 2.01 | 1.00 | 1.00 | 1.14 | 3.11 | 1.01 | 75.86 |
| g. SES/G. | | | | | 7.94 | 1.00 | 3.92 | 4.54 | 11.91 | 4.00 | 3.03 |
| g./tsp SES | | | | | 0.504 | 4.000 | 1.020 | 0.882 | 0.336 | 1.000 | 1.318 |
| cal/batch | | | | | 4.00 | 16.00 | 1.50 | 2.72 | 0.00 | 0.00 | 0.00 |
| cal/tsp SES | | | | | 1.99 | 16.00 | 1.50 | 2.39 | 0.00 | 0.00 | 0.00 |
| | | | | | | | | | | | |
| % of sweetness from Stevia | | | | | 0.0% | 0.0% | 97.5% | 98.8% | 4.4% | 82.7% | 77.2% |
| wt % stevia | | | | | 0.00% | 0.00% | 2.12% | 2.49% | 4.31% | 1.27% | 1.30% |

Several observations can be made about the current products depicted in Table 2. All require greater than about 6.7 mg. of stevia extract to deliver a teaspoon of SES with most requiring about 20 mg. Also, in most cases the stevia provides most of the sweetness. One exception is the stevia bulk product, which uses a sweet sugar alcohol as a bulking agent. In this product the stevia provides about 30% of the sweetness. However, this product uses a standard stevia extract and still retains a licorice note despite dilution with the sugar alcohol.

The amount of any particular ingredient or combination of ingredients used in the compositions of the present invention can be expressed as weight ratios, sweetness contributions, or mgs of stevia extract per SES. For this disclosure 99% rebaudioside A is assumed to have a sweetness intensity of 330, 90% rebaudioside A is assumed to have a sweetness intensity of 310, 80% rebaudioside A is assumed to have a sweetness intensity of 291, and stevia extract (about 40% rebaudioside A) is assumed to have a sweetness intensity of 180. It is well known that sweetness intensity varies with concentration. Figure 1 (from "Use of Stevia Rebaudiana sweeteners in Japan", Kenji Mizutani et.al.) shows the concentration curve for the stevia extract and rebaudioside A. For this disclosure the intensity was chosen to match that expect in a normal cup of coffee (about 2 tsp of sucrose).

The sweet contribution from high rebaudioside A stevia extracts can be from 96.5% to 20% preferably between 96.5 and 50%, and even more preferably between 93.3 and 85%. While lower rebaudioside concentrations provide even cleaner tastes, they increase the caloric content to unacceptable levels given the caloric content of the simple sugar used in compositions of the present invention. The sweetness intensity can be any level consistent with the preferred ratio of simple sugar to stevia.

In the compositions of the present invention, the stevia extract can be any purified extract in which the relative portion of rebaudioside A to stevioside is increased over that found in the native leaves. The concentration is from 80% w/w to 99% w/w of all sweet steviol glycosides and preferably from 96.5% w/w to 99% w/w and even more preferred from 95% w/w to 99% w/w.

### Simple sugars:

The simple sugar is any sweet mono or disaccharide, including (but not limited to) sucrose, glucose, or fructose, or combinations thereof. Sucrose and fructose are preferred. The simple sugar is also preferably refined to eliminate brown sweet note, especially molasses and caramel notes. Minimally sweet non-polymeric materials, such as FOS, should also be minimized.

### Other sweeteners

Additional sweeteners that can be added to the stevia-simple sugar combination include fructooligosaccharide, trehelose, a sugar alcohol, tagatose, a nutritive sugar, a high intensity sweetener, and mixtures thereof.

### Other Components

The compositions can contain other components, including flavor, aroma, other nutritional component, binders, and mixtures thereof.

As used herein, unless otherwise indicated, the term "flavor" means any food-grade material that may be added to the present compositions to provide a desired flavor to a foodstuff. Flavors useful in the present invention include, for example, cream, hazelnut, vanilla, chocolate, cinnamon, pecan, lemon, lime, raspberry, peach, mango, vanillin, butter, butterscotch, tea, orange, tangerine, caramel, strawberry, banana, grape, plum, cherry, blueberry, pineapple, elderberry, watermelon, bubblegum, cantaloupe, guava, kiwi, papaya, coconut, mint, spearmint, derivatives, and combinations thereof.

As used herein, unless otherwise indicated, the term "aroma" means any food-grade volatile substance that may be employed to produce a desired scent, for example, when mixed with a foodstuff. Aromas useful in the present invention include, for example, essential oils (citrus oil), expressed oils (orange oil), distilled oils (rose oil), extracts (fruits), anethole (liquorice, anise seed, ouzo, fennel), anisole (anise seed), benzaldehyde (marzipan, almond), benzyl alcohol (marzipan, almond), camphor (cinnamomum camphora), cinnamaldehyde (cinnamon), citral (citronella oil, lemon oil), d-limonene (orange) ethyl butanoate (pineapple), eugenol (clove oil), furaneol (strawberry), furfural (caramel), linalool (coriander, rose wood), menthol (peppermint), methyl butanoate (apple, pineapple), methyl salicylate (oil of wintergreen), neral (orange flowers), nerolin (orange flowers), pentyl butanoate (pear, apricot), pentyl pentanoate (apple, pineapple), sotolon (maple syrup, curry, fennugreek), strawberry ketone (strawberry), substituted pyrazines, e.g., 2-ethoxy-3-isopropylpyrazine; 2-methoxy-3-sec-butylpyrazine; and 2-methoxy-3-methylpyrazine (toasted seeds of fenugreek, cumin, and coriander), thujone (juniper, common sage, Nootka cypress, and wormwood), thymol (camphor-like), trimethylamine (fish), vanillin (vanilla), and combinations thereof. Preferred aroma components according to the present invention include, essential oils (citrus oil), expressed oils (orange oil), distilled oils (rose oil), extracts (fruits), benzaldehyde, d-limonene, furfural, menthol, methyl butanoate, pentyl butanoate, salts, derivatives, and combinations thereof.

The aroma may be present in any amount in the composition. Preferably, the aroma component is present in an amount from 2- to 10-times the detectable amount. More preferably, the aroma component is present in an amount from 2- to 5-times the detectable amount. As used herein, unless otherwise indicated, the term "detectable amount" is the amount of the aroma component required to produce a scent detectable in the foodstuff.

As used herein, unless otherwise indicated, the term "binder" refers to any food-grade material that is suitable for facilitating the pressing and formation of tablets. The selection of an appropriate binder is not critical and embraces any conventional binder so long as the binder does not substantially interfere with the self-mixing or the organoleptic properties of the foodstuff. Non-limiting examples of suitable binders useful in the present invention, include microcrystalline cellulose, gum tragacanth, gelatin, leucine, lactose, and combinations thereof. Preferably, the binder, if used, accounts for 10% to 15%, by weight of the total composition.

### Methods of Making

Compositions of the present invention can be made by any method known to those skilled in the art. that provide homogenous even or homogeneous mixtures of the ingredients. These methods include dry blending, spray drying, agglomeration, wet granulation, compaction, co-crystalization and the like.

The sweetening composition can be packaged in sachets or packets, dissolvable sweetening strips, sprays, drops, as a bulk sweetener, in cubes, or any normal sugar forms. Unit doses forms like sachets and cubes can contain from 2 to 10 g. of SES. Bulk products can be formulated to contain from 2 to 100 g. of SES per teaspoon of volume.

The sweetening composition of the present invention can be provided to consumers in any form suitable for delivery into the comestible to be sweetened, including sachets, packets, bulk bags or boxes, cubes, tablets, mists, drops, or dissolvable strips. The composition can be delivered as a unit dose or in bulk form.

The unit dose can be any customary dose, e.g., a gram, a cup, or a teaspoon. These unit forms typically contain from 2 to 10 g. of SES. A composition of the present invention can deliver 0.02 to 0.001 g. of stevia per unit package, more preferably 0.005 to 0.0015 g. of stevia per unit package, and even more preferably 0.003 to 0.0020 g. of stevia per unit package.

The compositions of the present invention can have from 1 to 12 kcals per teaspoon of SES.

The following examples are provided to further illustrate the compositions and methods of the present invention. These examples are illustrative only and are not intended to limit the scope of the invention in any way.

### EXAMPLES

### Example 1

100 g. of DOMINO® brand confectioners sugar (sucrose) (Domino Foods, Inc., Baltimore, MD) and 2.12 g. of stevia extract (Idyll Life Co., Ltd., Bangkok, Thailand), which has a rebaudioside A concentration of 99wt% relative to all steviol glycosides, are mixed and dry blended by sequential cutting and remixing (e.g., v-blending). The resulting mixture has a calculated SES (based on reported rebaudioside-A sweetness intensity of 330x sucrose) of 8 grams. of sucrose per gram.

**Table 3-1**

| Sweetener/Ingredient | Relative Sweetness | | | Energy | |
|---|---|---|---|---|---|
| | sucrose =1 | g. per Tsp SES | g. SES per kcal | kcals per g. | |
| | | | | | Example 1 |
| | | | | | Sucrose Stevia 99 |
| Maltodextrin | 0.01 | 400 | 0.00 | 4.0 | |
| FOS | 0.10 | 40.0 | 0.07 | 1.5 | |
| Erythritol | 0.70 | 5.71 | | 0.0 | |
| Fructose | 1.05 | 3.81 | 0.26 | 4.0 | |
| Molassas Solids | 1.00 | 4.00 | 0.25 | 4.0 | |
| Agave Nector (hydrolysed) | 1.05 | 3.81 | 0.26 | 4.0 | |
| Sucralose | 600 | 0.0067 | | 0.0 | |
| Sucrose | 1.00 | 4.00 | 0.25 | 4.0 | 100.00 |
| Concentrated Stevia (99 reb) | 330 | 0.0121 | | 0.0 | 2.12 |
| Concentrated Stevia (90 reb) | 310 | 0.0129 | | 0.0 | |
| Concentrated Stevia (80 reb) | 291 | 0.0138 | | 0.0 | |
| Concentrated Stevia (65 reb) | 261 | 0.0153 | | 0.0 | |
| Stevia Extract (~24% reb) | 180 | 0.0222 | | 0.0 | |
| | | | | | |
| Batch | | | | | 102.1200 |
| | | | | | |
| g stevia/batch | | | | | 2.1200 |
| mg stevia/tsp SES | | | | | 10.6 |
| g SES/batch | | | | | 799.18 |
| tsp SES/batch | | | | | 199.80 |
| g. SES/G. | | | | | 7.83 |
| g./tsp SES | | | | | 0.511 |
| cal/batch | | | | | 400.00 |
| cal/tsp SES | | | | | 2.00 |
| | | | | | |
| % of sweetness from Stevia | | | | | 87.5% |
| wt % stevia | | | | | 2.08% |

### Example 2

2 g. of the blend from Example 1 (Sample A) and 2 packets (about 2 g.) of STEVIAPLUS® Sweetleaf ® brand Stevia (Wisdom Natural Brands, Gilbert, AZ) (Comparative Sample B) are each mixed with 160 g. of hot water from a Flavia Brand Coffee Maker (Flavia Beverage Systems, West Chester, PA). Each packet used in Sample B is noted on the box to contain about 2 teaspoons of SES and 1 g. of FOS. Therefore, each packet has equivalent SES at about 10% sucrose solution equivalent in the 160 grams of water Typical stevia extracts contain less than about 40% rebaudioside A.

**Table 3-2**

| Sweetener/ingredient | Relative Sweetness | | | Energy | | |
|---|---|---|---|---|---|---|
| | sucrose =1 | G. per Tsp SES | g. SES per kcal | kcals per g. | Example 2 | |
| | | | | | A | B (Comparative) |
| | | | | | Sucrose Stevia 99 | FOS Stevia 65 |
| Maltodextrin | 0.01 | 400 | 0.00 | 4.0 | | |
| FOS | 0.10 | 40.0 | 0.07 | 1.5 | | 2.00 |
| Erythritol | 0.70 | 5.71 | | 0.0 | | |
| Fructose | 1.05 | 3.81 | 0.26 | 4.0 | | |
| Molasses Solids | 1.00 | 4.00 | 0.25 | 4.0 | | |
| Agave Nector (hydrolyzed) | 1.05 | 3.81 | 0.26 | 4.0 | | |
| Sucralose | 600 | 0.0067 | | 0.0 | | |
| Sucrose | 1.00 | 4.00 | 0.25 | 4.0 | 1.96 | |
| Concentrated Stevia (99 reb) | 330 | 0.0121 | | 0.0 | 0.04 | |
| Concentrated Stevia (90 reb) | 310 | 0.0129 | | 0.0 | | |
| Concentrated Stevia (80 reb) | 291 | 0.0138 | | 0.0 | | |
| Concentrated Stcvia (65 reb) | 261 | 0.0153 | | 0.0 | | |
| Stcvia Extract (~24% reb) | 180 | 0.0222 | | 0.0 | | 0/0878 |
| | | | | | | |
| Batch | | | | | 2.0000 | 2.0878 |
| | | | | | | |
| g stevia/batch | | | | | 0.0415 | 0/0878 |
| mg stevia/tsp SES | | | | | 10.6 | 21.9 |
| g SES/batch | | | | | 15.65 | 16.02 |
| tsp SES/batch | | | | | 3.91 | 4.01 |
| g. SES/G. | | | | | 7.83 | 7.68 |
| g./tsp SES | | | | | 0.511 | 0.521 |
| cal/batch | | | | | 7.83 | 3.00 |
| cal/tsp SES | | | | | 2.00 | 0.75 |
| | | | | | | |
| % of sweetness from Stevia | | | | | 87.5% | 98.8% |
| wt % stevia | | | | | 2.08% | 4.20% |

The samples are consumed warm by three panelists. Consensus opinion is that both samples are around the same sweetness level. Sample A has a clean sweet taste with no non-sugar off notes. Comparative Sample B tastes bitter and has licorice notes.

### Example 3

Five samples are made. Each starts with 8 oz. of hot water from a Flavia Brand Coffee Maker (Flavia Beverage Systems, West Chester, PA)

| | |
|---|---|
| Comparative Sample A | 1 packet of SPLENDA® brand No Calorie Sweetener (McNeil Nutritionals, LLC, Ft. Washington, PA) |
| Sample B | 1.2 g. blend form Example 1 |
| Smaple C | 1.74 g. blend from Example 1 |
| Comparative Sample D | 8 g. sucrose |
| Comparative Sample E | 1 g. confectioners sugar (sucrose) |

**Table 3-3**

| Sweetener/Ingredient | Relative Sweetness | | | Energy | | | | | |
|---|---|---|---|---|---|---|---|---|---|
| | sucrose =1 | g. per Tsp SES | g. SES per kcal | kcals per g. | Example 3 | | | | |
| | | | | | A* | B | C | D* | E* |
| | | | | | md sucralose (Splenda) | sucrose Stevia 99 | sucrose Stevia 99 | sucrose | sucrose Stevia 65 (Domino) |
| Maltodextrin | 0.01 | 400 | 0.00 | 4.0 | 1.000 | | | | |
| FOS | 0.10 | 40.0 | 0.07 | 1.5 | | | | | |
| Erythritol | 0.70 | 5.71 | | 0.0 | | | | | |
| Fructose | 1.05 | 3.81 | 0.26 | 4.0 | | | | | |
| Molasses Solids | 1.00 | 4.00 | 0.25 | 4.0 | | | | | |
| Agave Nector (hydrolyzed) | 1.05 | 3.81 | 0.26 | 4.0 | | | | | |
| Sucralose | 600 | 0.0067 | | 0.0 | 0.0134 | | | | |
| Sucrose | 1.00 | 4.00 | 0.25 | 4.0 | | 1.18 | 1.70 | 8.00 | 1.00 |
| Concentrated Stevia (99 reb) | 330 | 0.0121 | | 0.0 | | 0.02 | 0.04 | | |
| Concentrated Stcvia (90 reb) | 310 | 0.0129 | | 0.0 | | | | | |
| Concentrated Stevia (80 reb) | 291 | 0.0138 | | 0.0 | | | | | |
| Concentrated Stevia (65 reb) | 261 | 0.0153 | | 0.0 | | | | | |
| Stevia Extract (~24% reb) | 180 | 0.0222 | | 0.0 | | | | | |
| | | | | | | | | | |
| Batch | | | | | 1.0134 | 1.2000 | 1.7400 | 8.0000 | 1.0000 |
| | | | | | | | | | |
| g stevia/batch | | | | | 0.0000 | 0.0249 | 0.0361 | 0.0000 | 0.0000 |
| mg stevia/tsp SES | | | | | 0.0 | 10.6 | 10.6 | 0.0 | 0.0 |
| g SES/batch | | | | | 8.05 | 9.39 | 13.62 | 8.00 | 1.00 |
| tsp SES/batch | | | | | 2.01 | 2.35 | 3.40 | 2.00 | 0.25 |
| g. SES/G. | | | | | 7.94 | 7.83 | 7.83 | 1.00 | 1.00 |
| g./tsp SES | | | | | 0.504 | 0.511 | 0.511 | 4.000 | 4.000 |
| cal/batch | | | | | 4.00 | 4.70 | 6.82 | 32.00 | 4.00 |
| cal/tsp SES | | | | | 1.99 | 2.00 | 2.00 | 16.00 | 16.00 |
| | | | | | | | | | |
| % of sweetness from Stevia | | | | | 0.0% | 87.5% | 87.5% | 0.0% | 0.0% |
| wt % stevia | | | | | 0.00% | 2.08% | 2.08% | 0.00% | 0.00% |

| | | | | | | | | | |
|---|---|---|---|---|---|---|---|---|---|
| * : Comparative | | | | | | | | | |

The samples are tasted warm and rated for sweetness level as follows: A is slightly sweeter than C, which is sweeter than B and D, which are about the same and much sweeter than E, which has a barely perceptible sweetness.

### Example 4

Four samples re made and each starts with 8 oz. of FLAVIA® brand blueberry tea (Flavia Beverage Systems, West Chester, PA).

| | |
|---|---|
| Comparative Sample A | 1 packet of Splenda® brand No Calorie Sweetener (McNeil Nutritionals, LLC., Ft. Washington, PA) |
| Sample B | 1.2 g. blend form Example 1 |
| Comparative Sample C | 1 packet STEVIAPLUS® Sweetleaf ® brand Stevia |
| Comparative Sample D | 8 g. sucrose |

| Sweetener/Ingredient | Relative Sweetness | | | Energy | | | | |
|---|---|---|---|---|---|---|---|---|
| | sucrose =1 | g. per Tsp SES | g. SES per kcal | Kcals per g. | Example 4 | | | |
| | | | | | A* | B | C* | D* |
| | | | | | md sucralose (Splenda) | sucrose Stevia 99 | FOS Stevia extract | sucrose |
| Maltodextrin | 0.01 | 400 | 0.00 | 4.0 | 1.000 | | | |
| FOS | 0.10 | 40.0 | 0.07 | 1.5 | | | 1.000 | |
| Erythritol | 0.70 | 5.71 | | 0.0 | | | | |
| Fructose | 1.05 | 3.81 | 0.26 | 4.0 | | | | |
| Molasses Solids | 1.00 | 4.00 | 0.25 | 4.0 | | | | |
| Agave Nector (hydrolyzed) | 1.05 | 3.81 | 0.26 | 4.0 | | | | |
| Sucralose | 600 | 0.0067 | | 0.0 | 0.0134 | | | |
| Sucrose | 1.00 | 4.00 | 0.25 | 4.0 | | 1.18 | | 8.00 |
| Concentrated Stevia (99 reb) | 330 | 0.0121 | | 0.0 | | 0.02 | | |
| Concentrated Stevia (90 reb) | 310 | 0.0129 | | 0.0 | | | | |
| Concentrated Stevia (80 reb) | 291 | 0.0138 | | 0.0 | | | | |
| Concentrated Stevia (65 reb) | 261 | 0.0153 | | 0.0 | | | | |
| Stevia Extract (-24% reb) | 180 | 0.0222 | | 0.0 | | | 0.178 | |
| | | | | | | | | |
| Batch | | | | | 1.0134 | 1.2000 | 1.178 | 8.0000 |
| | | | | | | | | |
| g stevia/batch | | | | | 0.0000 | 0.0249 | 0.1780 | 0.0000 |
| mg stevia/tsp SES | | | | | 0.0 | 10.6 | 22.1 | 0.0 |

| | | | | | | | | |
|---|---|---|---|---|---|---|---|---|
| * Comparative | | | | | | | | |

**Table 3-4**

| Sweetener/Ingredient | Relative Sweetness | | | Energy | | | | |
|---|---|---|---|---|---|---|---|---|
| | sucrose =1 | g. per Tsp SES | g. SES per kcal | Kcals per g. | Example 4 | | | |
| | | | | | A | B | C | D |
| | | | | | md sucralose (Splenda) | sucrose Stevia 99 | FOS Stevia extract | sucrose |
| g SES/batch | | | | | 8.05 | 9.39 | 32.19 | 8.00 |
| tsp SES/batch | | | | | 2.01 | 2.35 | 8.05 | 2.00 |
| g. SES/G. | | | | | 7.94 | 7.83 | 27.33 | 1.00 |
| g./tsp SES | | | | | 0.504 | 0.511 | 0.146 | 4.000 |
| cal/batch | | | | | 4.00 | 4.70 | 1.50 | 32.00 |
| cal/tsp SES | | | | | 1.99 | 2.00 | 0.19 | 16.00 |
| | | | | | | | | |
| % of sweetness from Stevia | | | | | 0.0% | 87.5% | 99.7% | 0.0% |
| wt % stevia | | | | | 0.00% | 2.08% | 15.11% | 0.00% |

Three panelists taste the samples for preference and bitterness. Consensus ratings are as follows: Preference: A better than Band D which are very similar and both of which are better than C. Bitterness: A and D are equal and only slightly less bitter than B, which is much less bitter than C.

### Example 5

Four samples are made each starting with 8 oz. of FLAVIA® brand raspberry spark Tea.

| | |
|---|---|
| Comparative Sample A | 1 packet of SPLENDA brand No Calorie Sweetener |
| Sample B | 1.2 g. blend form Example 1 |
| Comparative Sample C | 1 packet STEVIAPLUS® Sweetleaf® brand Stevia |
| Comparative Sample D | 8 g. sucrose |

| Sweetener/Ingredient | Relative Sweetness | | | Energy | | | | |
|---|---|---|---|---|---|---|---|---|
| | sucrose =1 | g. per Tsp SES | g. SES per kcal | kcals per g. | Example 5 | | | |
| | | | | | A* | B | C* | D* |
| | | | | | md sucralose (Splenda) | sucrose Stevia 99 | FOS Stevia extract | sucrose |
| Maltodextrin | 0.01 | 400 | 0.00 | 4.0 | 1.000 | | | |
| FOS | 0.10 | 40.0 | 0.07 | 1.5 | | | 1 | |
| Erythritol | 0.70 | 5.71 | | 0.0 | | | | |
| Fructose | 1.05 | 3.81 | 0.26 | 4.0 | | | | |
| Molasses Solids | 1.00 | 4.00 | 0.25 | 4.0 | | | | |
| Agave Nector (hydrolyzed) | 1.05 | 3.81 | 0.26 | 4.0 | | | | |
| Sucralose | 600 | 0.0067 | | 0.0 | 0.0134 | | | |
| Sucrose | 1.00 | 4.00 | 0.25 | 4.0 | | 1.18 | | 8.00 |
| Concentrated Stevia (99 rcb) | 330 | 0.0121 | | 0.0 | | 0.02 | - | |
| Concentrated Stevia (90 reb) | 310 | 0.0129 | | 0.0 | | | | |
| Concentrated Stevia (80 reb) | 291 | 0.0138 | | 0.0 | | | | |
| Concentrated Stevia (65 reb) | 261 | 0.0153 | | 0.0 | | | | |
| Stcvia Extract (~24% reb) | 180 | 0.0222 | | 0.0 | | | .178 | |

| | | | | | A | B | C | D |
|---|---|---|---|---|---|---|---|---|
| | | | | | md sucralose (Splenda) | sucrose Stevia 99 | FOS Stevia extract | sucrose |
| Batch | | | | | 1.0134 | 1.2000 | 1.178 | 8.0000 |
| | | | | | | | | |
| g stevia/batch | | | | | 0.0000 | 0.0249 | 0.1780 | 0.0000 |
| mg stevia/tsp SES | | | | | 0.0 | 10.6 | 22.2 | 0.0 |
| g SES/batch | | | | | 8.05 | 9.39 | 32.10 | 8.00 |
| tsp SES/batch | | | | | 2.01 | 2.35 | 8.02 | 2.00 |
| g. SES/G. | | | | | 7.94 | 7.83 | 27.25 | 1.00 |
| g./tsp SES | | | | | 0.504 | 0.511 | 0.147 | 4.000 |
| cal/batch | | | | | 4.00 | 4.70 | 4.00 | 32.00 |
| cal/tsp SES | | | | | 1.99 | 2.00 | 0.50 | 16.00 |
| | | | | | | | | |
| % of sweetness from Stevia | | | | | 0.0% | 87.5% | 100.0% | 0.0% |
| wt % stevia | | | | | 0.00% | 2.08% | 15.11% | 0.00% |

| | | | | | | | | |
|---|---|---|---|---|---|---|---|---|
| * : Comparative | | | | | | | | |

Three panelists taste the samples and judge them for preference and bitterness. Consensus ratings are as follows: Preference: B slightly better than A, which was slightly better to D, and much better than C. Bitterness A, B, and D are similar and are less bitter than C.

### Example 6

Two additional samples are made with each starting with 8 oz of hot water from a Flavia Brand Coffee Maker (Flavia Beverage Systems, West Chester, PA).

| | |
|---|---|
| Sample A | 12 g. agave nectar, 70% solids, and fully hydrolysed agave inulin (fructose), 8 g. of water, and 0.21 g. of stevia extract (Idyll Life Co., Ltd., Bangkok, Thailand), which has a rebaudioside A concentration of 99 wt% relative to all steviol glycosides |
| Comparative Sample B | 10 g. of AUNT PATTY'S® brand molasses crystals (GloryBee Foods, Inc, Eugene, OR), 10 g. of water, 0.212 g. of stevia extract (Idyll Life Co., Ltd., Bangkok, Thailand), which has a rebaudioside A concentration of 99wt% relative to all steviol glycosides. |

**Table 3-6**

| Company.Sweetener/Ingredient | Relative Sweetness | | | Energy | | |
|---|---|---|---|---|---|---|
| | sucrose =1 | g. per Tsp SES | g. SES per kcal | kcals per g. | Example 6 | |
| | | | | | A | B * |
| | | | | | agave Stevia 99 | molasses Stevia 99 |
| Maltodextrin | 0.01 | 400 | 0.00 | 4.0 | | |
| FOS | 0.10 | 40.0 | 0.07 | 1.5 | | |
| Erythritol | 0.70 | 5.71 | | 0.0 | | |
| Fructose | 1.05 | 3.81 | 0.26 | 4.0 | | |
| Molasses Solids | 1.00 | 4.00 | 0.25 | 4.0 | | 10.00 |
| Agave Nector (hydrolyzed) | 1.05 | 3.81 | 0.26 | 4.0 | 8.4 | |
| Sucralose | 600 | 0.0067 | | 0.0 | | |
| Sucrose | 1.00 | 4.00 | 0.25 | 4.0 | | |
| Concentrated Stevia (99 reb) | 330 | 0.0121 | | 0.0 | 0.2100 | 0.21 |
| Concentrated Stevia (90 reb) | 310 | 0.0129 | | 0.0 | | |
| Concentrated Stevia (80 reb) | 291 | 0.0138 | | 0.0 | | |
| Concentrated Stevia (65 reb) | 261 | 0.0153 | | 0.0 | | |
| Stevia Extract (~24% reb) | 180 | 0.0222 | | 0.0 | | |
| | | | | | | |
| Batch | | | | | 8.6100 | 10.2100 |
| | | | | | | |
| g stevia/batch | | | | | 0.2100 | 0.2100 |
| mg stevia/tsp SES | | | | | 10.8 | 10.6 |
| g SES/batch | | | | | 78.08 | 79.26 |
| tsp SES/batch | | | | | 19.52 | 19.81 |
| g. SES/G. | | | | | 9.07 | 7.76 |
| g./tsp SGS | | | | | 0.441 | 0.515 |
| cal/batch | | | | | 33.60 | 40.00 |
| cal/tsp SES | | | | | 1.72 | 2.02 |
| | | | | | | |
| % of sweetness from Stevia | | | | | 88.7% | 87.4% |
| wt % stevia | | | | | 2.44% | 2.06% |

| | | | | | | |
|---|---|---|---|---|---|---|
| * : Comparative * Comparative | | | | | | |

The fructose blend has a clean sweet taste with barely perceptible bitterness. The molasses blend is sweet but has bitter, dirty notes.

### Example 7

Two samples are made.

| | |
|---|---|
| Sample A | 100 g. of sucrose (confectioners sugar) and 2.12 g. of stevia extract (Idyll Life Co., Ltd., Bangkok, Thailand), which has a rebaudioside A concentration of 99 wt% relative to all steviol glycosides. |
| Comparative Sample B | 100 g. of FOS (Orafti North America, Malvern, PA) and 2.12 g. of stevia extract (Idyll Life Co., Ltd., Bangkok, Thailand), which has a rebaudioside A concentration of 99wt% relative to all steviol glycosides. |

**Table 3-7**

| Sweetener/Ingredient | Relative Sweetness | | | Energy | | |
|---|---|---|---|---|---|---|
| | sucrose =1 | g. per Tsp SES | g. SES per kcal | kcals per g. | Example 7 | |
| | | | | | A | B* |
| | | | | | sucrose Stevia 99 | FOS Stevia 99 |
| Maltodextrin | 0.01 | 400 | 0.00 | 4.0 | | |
| FOS | 0.10 | 40.0 | 0.07 | 1.5 | | 100 |
| Erythritol | 0.70 | 5.71 | | 0.0 | | |
| Fructose | 1.05 | 3.81 | 0.26 | 4.0 | | |
| Molasses Solids | 1.00 | 4.00 | 0.25 | 4.0 | | |
| Agave Nector (hydrolyzed) | 1.05 | 3.81 | 0.26 | 4.0 | | |
| Sucralose | 600 | 0.0067 | | 0.0 | | |
| Sucrose | 1.00 | 4.00 | 0.25 | 4.0 | 100 | |
| Concentrated Stevia (99 reb) | 330 | 0.0121 | | 0.0 | 2.1200 | 2.12 |
| Concentrated Stevia (90 reb) | 310 | 0.0129 | | 0.0 | | |
| Concentrated Stevia (80 reb) | 291 | 0.0138 | | 0.0 | | |
| Concentrated Stevia (65 reb) | 261 | 0.0153 | | 0.0 | | |
| Stevia Extract (~24% reb) | 180 | 0.0222 | | 0.0 | | |
| | | | | | | |
| Batch | | | | | 102.1200 | 102.1200 |
| | | | | | | |
| g stevia/batch | | | | | 2.1200 | 2.1200 |
| mg stevia/tsp SES | | | | | 10.6 | 12.0 |
| g SES/batch | | | | | 799.18 | 709.18 |
| tsp SES/batch | | | | | 199.80 | 177.30 |
| g. SES/G. | | | | | 7.83 | 6.94 |
| g./tsp SES | | | | | 0.511 | 0.576 |
| cal/batch | | | | | 400.00 | 150.00 |
| cal/tsp SES | | | | | 2.00 | 0.85 |
| | | | | | | |
| % of sweetness from Stevia | | | | | 87.5% | 98.6% |
| wt % stevia | | | | | 2.08% | 2.08% |

| | | | | | | |
|---|---|---|---|---|---|---|
| * : Comparative | | | | | | |

A level, one teaspoon quantity of each sample is dissolved in 4 oz of hot water from a Flavia Brand Coffee Maker (Flavia Beverage Systems, West Chester, PA). and was tasted by two panelists. Both samples are judged to be about the same sweetness. Sample A has a clean sweet taste, while Sample B is slightly bitter.

### Example 8

Three samples were made using the same materials as example 7 to test along side Sample A from Example 7

| | |
|---|---|
| Sample A | 100 g. of sucrose (confectioners sugar) and 2.12 g. of stevia extract (from Example 7) |
| Sample B | 50 g. of sucrose and 2.12 g. of stevia extract |
| Sample C | 25 g. of sucrose and 2.12 g. of stevia extract |
| Comparative Sample D | 5 g. of sucrose and 2.12 g. of stevia extract |

**Table 3-8**

| Sweetener/Ingredient | Relative Sweetness | | | Energy | | | | |
|---|---|---|---|---|---|---|---|---|
| | sucrose =1 | g. per Tsp SES | g. SES Per kcal | kcals per g. | Example 8 | | | |
| | | | | | A | B | C | D * |
| | | | | | sucrose Stevia 99 | sucrose Stevia 99 | sucrose Stevia 99 | sucrose Stevia 99 |
| Maltodextrin | 0.01 | 400 | 0.00 | 4.0 | | | | |
| FOS | 0.10 | 40.0 | 0.07 | 1.5 | | | | |
| Erythritol | 0.70 | 5.71 | | 0.0 | | | | |
| Fructose | 1.05 | 3.81 | 0.26 | 4.0 | | | | |
| Molasses Solids | 1.00 | 4.00 | 0.25 | 4.0 | | | | |
| Agave Nector (hydrolyzed) | 1.05 | 3.81 | 0.26 | 4.0 | | | | |
| Sucralose | 600 | 0.0067 | | 0.0 | | | | |
| Sucrose | 1.00 | 4.00 | 0.25 | 4.0 | 100.00 | 50.00 | 25.00 | 5.00 |
| Concentrated Stevia (99 reb) | 330 | 0.0121 | | 0.0 | 2.1200 | 2.1200 | 2.1200 | 2.1200 |
| Concentrated Stevia (90 reb) | 310 | 0.0129 | | 0.0 | | | | |
| Concentrated Stevia (80 reb) | 291 | 0.0138 | | 0.0 | | | | |
| Concentrated Stevia (65 reb) | 261 | 0.0153 | | 0.0 | | | | |
| Stevia Extract (~24% reb) | 180 | 0.0222 | | 0.0 | | | | |
| | | | | | | | | |
| Batch | | | | | 102.1200 | 52.1200 | 27.1200 | 7.1200 |
| | | | | | | | | |
| g stevia/batch | | | | | 2.1200 | 2.1200 | 2.1200 | 2.1200 |
| mg stevia/tsp SES | | | | | 10.6 | 11.3 | 11.7 | 12.0 |
| g SES/batch | | | | | 799.18 | 749.18 | 724.18 | 704.18 |
| tsp SES/batch | | | | | 199.80 | 187.30 | 181.05 | 176.05 |
| g. SES/G. | | | | | 7.83 | 14.37 | 26.70 | 98.90 |
| g./tsp SES | | | | | 0.511 | 0.278 | 0.150 | 0.040 |
| cal/batch | | | | | 400.00 | 200.00 | 100.00 | 20.00 |
| cal/tsp SES | | | | | 2.00 | 1.07 | 0.55 | 0.11 |
| | | | | | | | | |
| % of sweetness from stevia | | | | | 87.5% | 93.3% | 96.5% | 99.3% |
| wt % stevia | | | | | 2.08% | 4.07% | 7.82% | 29.78% |

| | | | | | | | | |
|---|---|---|---|---|---|---|---|---|
| * : Comparative | | | | | | | | |

A level, one tsp quantity of each sample is dissolved in 6 oz. of hot water from a Flavia Brand Coffee Maker (Flavia Beverage Systems, West Chester, PA) and tasted by two panelists. Sample A and B are noted to be sweet and have no bitter taste, Sample C has a very slight bitter note, Sample D is very bitter.

The sweetness contribution for each sample is calculated as follows:

| | |
|---|---|
| Sample A | 87.5 of sweetness from rebaudioside A |
| Sample B | 93.3 of sweetness from rebaudioside A |
| Sample C | 96.5 of sweetness from rebaudioside A |
| Comparative Sample D | 99.3 of sweetness from rebaudioside A |

### Example 9

The four samples from Example 8 are mixed at different levels in 6 oz of hot water from a Flavia Brand Coffee Maker (Flavia Beverage Systems, West Chester, PA) to achieve about equi-sweet levels. The equi-sweet level is calculated based on about 4 teaspoons of SES and an assumed stevia sweetness intensity of 330x sucrose.

| | |
|---|---|
| Sample A | 2.04 g. |
| Sample B | 1.12 g. |
| Sample C | 0.60 g. |
| Comparative Sample D | 0.16 g. |

**Table 3-9**

| Sweetener/Ingredient | Relative Sweetness | | | Energy | | | | |
|---|---|---|---|---|---|---|---|---|
| | sucrose =1 | g. per Tsp SES | g. SES per kcal | kcals per g. | Example 9 | | | |
| | | | | | sucrose Stevia 99 | sucrose Stevia 99 | sucrose Stevia 99 | sucrose * Stevia 99 |
| Maltodextrin | 0.01 | 400 | 0.00 | 4.0 | | | | |
| FOS | 0.10 | 40.0 | 0.07 | 1.5 | | | | |
| Erythritol | 0.70 | 5.71 | | 0.0 | | | | |
| Fructose | 1.05 | 3.81 | 0.26 | 4.0 | | | | |
| Molasses Solids | 1.00 | 4.00 | 0.25 | 4.0 | | | | |
| Agave Nector (hydrolyzed) | 1.05 | 3.81 | 0.26 | 4.0 | | | | |
| Sucralose | 600 | 0.0067 | | 0.0 | | | | |
| Sucrose | 1.00 | 4.00 | 0.25 | 4.0 | 2.00 | 1.07 | 0.55 | 0.11 |
| Concentrated Stevia (99 reb) | 330 | 0.0121 | | 0.0 | 0.0424 | 0.0456 | 0.0469 | 0.0476 |
| Concentrated Stevia (90 reb) | 310 | 0.0129 | | 0.0 | | | | |
| Concentrated Stevia (80 reb) | 291 | 0.0138 | | 0.0 | | | | |
| Concentrated Stevia (65 reb) | 261 | 0.0153 | | 0.0 | | | | |
| Stevia Extract (~24% reb) | 180 | 0.0222 | | 0.0 | | | | |
| | | | | | | | | |
| Batch | | | | | 2.0400 | 1.1200 | 0.6000 | 0.1600 |
| | | | | | | | | |

| Sweetener/Ingredient | Relative Sweetness | | | Energy | | | | |
|---|---|---|---|---|---|---|---|---|
| | sucrose =1 | g. per Tsp SES | g. SES per kcal | kcals per g. | Example 9 | | | |
| | | | | | sucrose Stevia 99 | sucrose Stevia 99 | sucrose Stevia 99 | sucrose * Stevia 99 |
| g stevia/batch | | | | | 0.0424 | 0.0456 | 0.0469 | 0.0476 |
| mg stevia/tsp SES | | | | | 10.6 | 11.3 | 11.7 | 12.0 |
| g SES/batch | | | | | 15.96 | 16.10 | 16.02 | 15.82 |
| tsp SES/batch | | | | | 3.99 | 4.02 | 4.01 | 3.96 |
| g. SES/G. | | | | | 7.83 | 14.37 | 26.70 | 98.90 |
| g./tsp SES | | | | | 0.511 | 0.278 | 0.150 | 0.040 |
| cal/batch | | | | | 7.99 | 4.30 | 2.21 | 0.45 |
| cal/tsp SES | | | | | 2.00 | 1.07 | 0.55 | 0.11 |
| | | | | | | | | |
| % of sweetness from stevia | | | | | 87.5% | 93.3% | 96.5% | 99.3% |
| wt % stevia | | | | | 2.08% | 4.07% | 7.82% | 29.78% |

| | | | | | | | | |
|---|---|---|---|---|---|---|---|---|
| * Comparative | | | | | | | | |

Sample A is noted to be sweet and have no bitter taste, Sample B has a very slight dirty note, Sample C has slight dirty note and a very slight bitter note, and Sample D has a dirty note and a slight bitter note.

### Example 10

Four Samples are made:

| | |
|---|---|
| Sample A | 10 g. of sucrose (confectioners sugar) and 0.2123 g. of stevia extract (99% Reb A) (Idyll Life Co., Ltd., Bangkok, Thailand) |
| Sample B | 10 g. of sucrose (confectioners sugar) and 0.2295 g. of stevia extract (90% Reb A) (Zibo Inchcape Stevia Co, Shandong, China) |
| Sample C | 10 g. of sucrose (confectioners sugar) and 0.2500 g. of stevia extract (80% Reb A) (Zibo Inchcape Stevia Co, Shandong, China) |
| Comparative Sample D | 10 g. of sucrose (confectioners sugar) and 0.3889 g. of stevia extract (std extract ~24% Reb A) (Zibo Inchcape Stevia Co, Shandong, China) |

**Table 3-10**

| Sweetener/Ingredient | Relative Sweetness | | | Energy | | | | |
|---|---|---|---|---|---|---|---|---|
| | sucrose =1 | g. per Tsp SES | g. SES per kcal | kcals per g. | Example 10 | | | |
| | | | | | A | B | C | D * |
| | | | | | sucrose Stevia 99 | sucrose Stevia 90 | sucrose Stevia 80 | sucrose Stevia 65 |
| Maltodextrin | 0.01 | 400 | 0.00 | 4.0 | | | | |
| FOS | 0.10 | 40.0 | 0.07 | 1.5 | | | | |
| Erythritol | 0.70 | 5.71 | | 0.0 | | | | |
| Fructose | 1.05 | 3.81 | 0.26 | 4.0 | | | | |
| Molasses Solids | 1.00 | 4.00 | 0.25 | 4.0 | | | | |
| Agave Nector (hydrolyzed) | 1.05 | 3.81 | 0.26 | 4.0 | | | | |
| Sucralose | 600 | 0.0067 | | 0.0 | | | | |
| Sucrose | 1.00 | 4.00 | 0.25 | 4.0 | 10.00 | 10.00 | 10.00 | 10.00 |
| Concentrated Stevia (99 reb) | 330 | 0.0121 | | 0.0 | 0.2123 | | | |
| Concentrated Stevia (90 reb) | 310 | 0.0129 | | 0.0 | | 0.2295 | | |
| Concentrated Stevia (80 reb) | 291 | 0.0138 | | 0.0 | | | 0.2500 | |
| Concentrated Stevia (65 reb) | 261 | 0.0153 | | 0.0 | | | | |
| Stevia Extract (~24% reb) | 180 | 0.0222 | | 0.0 | | | | 0.3889 |
| | | | | | | | | |
| Batch | | | | | 10.2123 | 10.2295 | 10.2500 | 10.3889 |
| | | | | | | | | |
| g stevia/batch | | | | | 0.2123 | 0.2295 | 0.2500 | 0.3889 |
| mg stevia/tsp SES | | | | | 10.6 | 11.3 | 12.1 | 19.4 |
| g SES/batch | | | | | 80.01 | 81.22 | 82.65 | 80.11 |
| tsp SES/batch | | | | | 20.00 | 20.30 | 20.66 | 20.03 |
| g. SES/G. | | | | | 7.83 | 7.94 | 8.06 | 7.71 |
| g./tsp SES | | | | | 0.511 | 0.504 | 0.496 | 0.519 |
| cal/batch | | | | | 40.00 | 40.00 | 40.00 | 40.00 |
| cal/tsp SES | | | | | 2.00 | 1.97 | 1.94 | 2.00 |
| | | | | | | | | |
| % of sweetness from Stevia | | | | | 87.5% | 87.7% | 87.9% | 87.5% |
| wt % stevia | | | | | 2.08% | 2.24% | 2.44% | 374% |

| | | | | | | | | |
|---|---|---|---|---|---|---|---|---|
| * Comparative | | | | | | | | |

2 g. of each sample is dissolved in 6 oz. of hot water from a Flavia Brand Coffee Maker (Flavia Beverage Systems, West Chester, PA and tasted. Sample A and B are noted to be sweet and have no bitter taste, Sample C has a very slight dirty note, Sample D has distinct bitter notes.

The samples are judged to be equi-sweet.

Unless otherwise defmed, all technical and scientific terms used herein have the same meaning as commonly understood by one of ordinary skill in the art to which this invention pertains. In case of conflict, the present specification, including definitions, will control.

## Claims

1. A reduced calorie tabletop sweetening composition comprising from 2 wt% to 4 wt% stevia extract and 90 wt% to 98 wt% simple sugar selected from the group consisting of monosaccharides, disaccharides and combinations thereof, wherein the stevia extract provides from 20% to 97% of the sweetness and has a rebaudioside A level of from 80 wt% to 99 wt% relative to all steviol glycosides.

2. The tabletop sweetening composition of claim 1, wherein the simple sugar is selected from the group consisting of sucrose, fructose, glucose, and mixtures thereof.

3. The tabletop sweetening composition of claim 1 or claim 2, wherein the stevia provides from 85 % to 97% of the sweetness, preferably from 88% to 97% of the sweetness.

4. The tabletop sweetening composition of claim 1 or claim 2, wherein the sweetening composition has from 0.01 to 1 kcals per gram of Sucrose Equivalent Sweetness (SES), preferably from 0.5 to 1 kcals per gram of SES.

5. The tabletop sweetening composition of claim 1 or claim 2, further comprising a member from the group consisting of a flavor, an aroma, a nutritional ingredient and combinations thereof.

6. The tabletop sweetening composition in claim 1 or claim 2, wherein the sweetening composition is a form selected from the group consisting of a non-flowable solid, a powder, a solution, a slurry, and a suspension.

7. The tabletop sweetener composition in claim 1 or claim 2 that is packaged in a unit dose selected from the group consisting of grams, teaspoons, tablespoons, cups, lbs, kilos, multiples thereof, and their SES equivalents.

8. The tabletop sweetening composition in claim 1 that contains less than 1% sweetness from polymeric sweeteners.

## Patentansprüche

1. Kalorienreduzierte Tischsüßzusammensetzung, umfassend 2 Gew.-% bis 4 Gew.-% Stevia-Extrakt und 90 Gew.-% bis 98 Gew.-% Einfachzucker, ausgewählt aus der aus Monosacchariden, Disacchariden und Kombinationen davon bestehenden Gruppe, wobei der Stevia-Extrakt 20% bis 97% der Süße liefert und eine Rebaudiosid-A-Konzentration von 80 Gew.-% bis 99 Gew.-% relativ zu allen Steviol-Glykosiden aufweist.

2. Tischsüßzusammensetzung nach Anspruch 1, wobei der Einfachzucker aus der aus Saccharose, Fructose, Glucose und Gemischen davon bestehenden Gruppe ausgewählt ist.

3. Tischsüßzusammensetzung nach Anspruch 1 oder Anspruch 2, wobei das Stevia 85% bis 97% der Süße, vorzugsweise 88% bis 97% der Süße liefert.

4. Tischsüßzusammensetzung nach Anspruch 1 oder Anspruch 2, wobei die Süßzusammensetzung 0,01 bis 1 kcal pro Gramm SES (Sucrose Equivalent Sweetness), vorzugsweise 0,5 bis 1 kcal pro Gramm SES aufweist.

5. Tischsüßzusammensetzung nach Anspruch 1 oder Anspruch 2, ferner umfassend ein Mitglied aus der aus einem Geschmacksstoff, einem Aroma, einem Nahrungsbestandteil und Kombinationen davon bestehenden Gruppe.

6. Tischsüßzusammensetzung in Anspruch 1 oder Anspruch 2, wobei die Süßzusammensetzung in einer aus der aus einem nicht fließfähigen Feststoff, einem Pulver, einer Lösung, einer Aufschlämmung und einer Suspension bestehenden Gruppe ausgewählten Form vorliegt.

7. Tischsüßmittelzusammensetzung in Anspruch 1 oder Anspruch 2, die in einer aus der aus Gramm, Teelöffeln, Esslöffeln, Tassen, lbs, Kilo, Vielfachen davon und deren SES-Äquivalenten bestehenden Gruppe ausgewählten Einheitsdosis abgepackt ist.

8. Tischsüßzusammensetzung in Anspruch 1, die weniger als 1% Süße von polymeren Süßmitteln enthält.

## Revendications

1. Composition sucrante de table à teneur réduite en calories comprenant entre 2 % en masse et 4 % en masse d'extrait de stévia et entre 90 % en masse et 98 % en masse d'un sucre simple choisi dans le groupe constitué par les monosaccharides, les disaccharides et leurs combinaisons, l'extrait de stévia conférant entre 20 % et 97 % du pouvoir sucrant et présentant une teneur en rébaudioside A comprise entre 80 % en masse et 99 % en masse par rapport à l'ensemble des glycosides de stéviol.

2. Composition sucrante de table conforme à la revendication 1, où le sucre simple est choisi dans le groupe constitué par le sucrose, le fructose, le glucose et leurs mélanges.

3. Composition sucrante de table conforme à la revendication 1 ou à la revendication 2, où le stévia confère entre 85 % et 97 % du pouvoir sucrant, préférentiellement entre 88 % et 97 % du pouvoir sucrant.

4. Composition sucrante de table conforme à la revendication 1 ou à la revendication 2, où la composition sucrante comporte entre 0,01 et 1 kcal par gramme de pouvoir sucrant équivalent sucrose (SES, *Sucrose Equivalent Sweetness*), préférentiellement entre 0,5 et 1 kcal par gramme de SES.

5. Composition sucrante de table conforme à la revendication 1 ou à la revendication 2, comprenant en outre un membre du groupe constitué par un arôme, un parfum, un ingrédient nutritionnel et leurs combinaisons.

6. Composition sucrante de table conforme à la revendication 1 ou à la revendication 2, où la composition sucrante est une forme choisie dans le groupe constitué par un solide non fluide, une poudre, une solution, une dispersion et une suspension.

7. Composition sucrante de table conforme à la revendication 1 ou à la revendication 2 qui est conditionnée en une dose unitaire choisie dans le groupe constitué par les grammes, les cuillères à café, les cuillères à soupe, les tasses, les livres, les kilos, leurs multiples et leurs équivalents en SES.

8. Composition sucrante de table conforme à la revendication 1 qui comporte moins de 1 % de pouvoir sucrant apporté par des agents sucrants polymères.
